# EUROPEAN PATENT SPECIFICATION

(11) **EP 0 887 289 B1**
(45) Date of publication and mention of the grant of the patent: **08.09.2004**
(21) Application number: 98201929.1
(22) Date of filing: 09.06.1998
(51) Int. Cl.: B65G 17/06

(54) **Conveyor belt with improved rod to link attachment**
Förderband mit verbesserter Stange-Glieder Verbindung
Bande transporteuse avec connection tige-maillon amélioreé

(30) Priority: 12.06.1997 US 873393; 19.12.1997 US 895424
(43) Date of publication of application: 30.12.1998
(73) Proprietor: Ashworth Bros., Inc., Fall River, Massachusetts 02722 (US)
(72) Inventor: Etherington, Michael, Winchester, Virginia 22602 (US); Funkhouser, William F., Mount Jackson, Virginia 22842 (US); Veach, Marshall L., Winchester, Virginia 22602 (US)
(74) Representative: Schumann, Bernard Herman Johan

(56) References cited:
- EP-A- 0 456 145
- EP-A- 0 642 997
- GB-A- 2 137 948
- US-A- 4 971 191
- US-A- 5 645 160

## Description

The invention relates to a conveyor belt comprised of a repeated arrangement of interconnected rods and connective links, said connective links each including a lateral cross-member and a pair of legs extending perpendicularly therefrom, said legs having a first set laterally aligned apertures for reception of a rod and a second set of laterally aligned apertures for reception of a rod, said links arranged such that the first apertures of a first link are aligned with the second apertures of a second link for reception of a rod there into,
wherein
each said rod comprises a locking element disposed at an end thereof.

Such a conveyor belt is known from EP-A-0 456 145.

Wire and plastic conveyor belt systems are widely used in a great variety of industrial fields. A wire mesh or plastic overlay can be used with the rods to provide a support surface of a conveyor belt. The wire or plastic components of the overlay are intermeshed together by connecting rods which extend transversely across the width of the belt. Typically the intermeshed overlay components are connected to one another by the connecting rods. Alternatively, the support surface provided by the rods can be used without an overlay. The ends of the rods are inserted into connective links and the rods and links are welded together. The connective link may serve as tractive links around a sprocket wheel.

In conventional conveyor belts, a weld is typically placed at the exterior sides of the link legs to attach the link to the rod. This weld serves two purposes. Firstly, it achieves positive fixation of the link to the outermost portion of the rod. This is important because the connective links at the outer edges of a belt are used for driving interface with the drive sprockets so that any transverse or lateral movement of the connective link along the rod will result in misalignment with the sprockets. This will lead to damage to the sprockets, belt and the system. Secondly, the weld prohibits the connective links from rotational movement that leads to "tenting" of the link on the rod. Tenting refers to the rotational movement of the link relative to the rod when the rods move together causing a link to tilt upward about its rod apertures, and is illustrated schematically in FIG. 29. This movement normally occurs on the inside edge of the belt during its collapsed state of operation in a spiral system, and cause the belt to jam during operation resulting in belt and system damage, as well as downtime.

The weld holding the link to the rod is a main area of perceived failure and real failure for conveyor belts since the weld is subjected to numerous stresses during operation. The biggest contributors to weld failures include normal fatigue caused by belt tensions above the allowable limit including lateral deflection of the legs of the connective links and rod buckling. These stresses on the links cause cracks to form in the welds. Even after a weld fails, however, it continues to function to hold the connective links in a fixed position which allows the belt to operate. It has been observed that the weld deposits on the rod act as barriers that trap the connective link in place allowing for proper sprocket and drive engagement. In addition, while tenting has been observed where welds have failed, in general the ragged edges of the fractured welds continue to prevent rotational movement of the connective link.

A conveyor belt with fractured welds is acceptable and operational as long as the system is running under allowable tension limits, however, the problem of perceived failure of the belt arises whenever some of the welds are cracked. Even though a belt with cracked welds is still able to function effectively under normal operating conditions, users who have been repeatedly warned by belt manufacturers that broken welds are precursors to real failure have perceived the broken welds as a failure in and of themselves. There has been a need to positively position the links and prevent their rotation about the rods, and eliminate this perceived problem with conventional belts that raises user complaints and warranty issues.

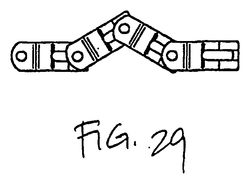

Besides showing the first signs of fatigue stress, the conventional welds between the links and rods also pose a time-consuming welding step during manufacture. As can be seen from FIGS. 26-28, the conventional methods require that the connective links be individually welded to the rods. This step is inefficient and expensive.

In conveyor belts used to move material through processing machinery, such as coating, freezing, cooking, etc., the process cycles have been carefully determined so that the material is conveyed to provide an optimum dwell time in processing. When there is a demand for a higher output of finished product, the most effective way of increasing the output is to enlarge the conveying surface to enable more product or material to be conveyed through the process cycle.

In a spiral path system, the conveyor belt is driven by friction on the inside edge of the spiral, and the belt must be sufficiently strong to withstand the resultant driving forces on the links and rods. The tension in the belt is always a design consideration in changing any of the belt parameters such as the size and strength of the links and rods since both of these changes affect the weight of the belt. The heavier the belt, the higher the resultant tension when the belt is driven.

In spiral systems, when a conveyor belt is subjected to tensions above an allowable limit, for instance while turning with an inside edge in a collapsed condition, the forces on the belt components comprise a tangential force on the outer link and a radially directed inward force which pulls the belt against the cylindrical driving surface. If this radially directed force component becomes sufficiently high, the connective rods buckle due to the columnar load placed on them. This is a failure that can occur with any width of belt if the belt is subject to tensions above an allowable limit. For rods above a certain length dimension, it has been observed that the belts will succumb to rod buckling at tensions below the allowable limit. Accordingly, as the width of a belt increases due to the use of longer rods, it takes significantly less tension to buckle the rods.

In a conventional conveyor belt, a current limitation to the size of the conveying surface is the width of the belt due to the column strength of the rods and the potential buckling problem. For example, one of the standards is to use 6-gauge rods which have a uniform diameter along their entire length, and is limited to a maximum length of 38 inches. It has been found that if the rods are made longer than 38 inches, the column strength of the rods poses a weakness to the design and failure by buckling at tensions below the allowable limit can result. This is particularly true in spiral systems which exert a high radial component of force on the rods directed toward the driving surface which can cause buckling of rods without sufficient column strength.

Another problem with conventional conveyor belts is that the connective links can break when a belt is subjected to tensions above the allowable limit and the welds have previously fractured. Unlike the situation with fractured welds in which the belt can continue to operate under the allowable tension limits, failure of the connective links is the final failure mode of the belt. If the belt is operated at excessive tension above the allowable limit after the welds have fractured, the links will fail.

Since a belt is driven by friction, the connective links are prone to fatigue stresses due to the resultant tension on them. When a belt is driven, the driving friction on the belt tends to draw the belt components together laterally. The periodic starting and stopping of the belt which is inherent to any operation causes the legs of a connective link to deflect laterally with respect to the rod, and to move rotationally with respect to the rod. Additionally the changes in belt tension through the system tend to cause the legs of the connective links to repeatedly deflect laterally. The lateral deflection refers to the tendency of the link legs to move inward, toward one another when the belt is driven and to spread outward when the driving friction on the belt is released. The continual movement causes fatigue stresses in the connective link and ultimately can lead to catastrophic link failure. When this occurs, the belt may physically separate resulting in damage to the system and large portions of the belt as well as downtime.

Both the lateral deflection and rotational movement of the link about the rod, i.e. tenting, during operation can result in fatigue failure of the link.

Therefore, there exists a need for a conveyor belt with structural features that will eliminate the time consuming welding step and thereby eliminate perceived and real weld failure, decrease the chances of tenting of the links, and presents a conveying surface with less crevices for sanitary operating conditions. In addition, there exists a need for a conveyor belt that can provide a larger surface for moving more products or articles through process cycles with structural features that reduce weld failure, decrease deflection and tenting of the links in order to resist fatigue failures, and increase the column strength of the rods to resist buckling. Enlarging the size of the surface is the preferred way to increasing output volume because the process cycles do not have to be altered from their predetermined settings.

Accordingly, the present invention provides a conveyor belt according to the preamble, which is characterized in that each said connective link comprises a corresponding rod fixation element on one of said apertures for constraining movement of said link relative to said rod, wherein said rod fixation element comprises an integral protrusion formed between the ends of the corresponding rod.

The present invention pertains to a conveyor belt comprising rods that are mechanically affixed to the connective links without the need for conventional welding. The rods are affixed to the link apertures by an interference fit combined with resistance welding.

During assembly, electrodes are applied to rods to provide the necessary energy for the rods to undergo a controlled deformation which results in the formation of an annular protrusion or swell. A protrusion is formed on either side of each leg of the link to constrain the link from lateral movement on the rod. At the ends of the rods, a similar process is used to form an upset or button head. In this way a button head can be thought of as a type of protrusion. The rods are thus mechanically affixed and resistance welded within the connective link apertures. By varying the position of an electrode on the rod during manufacture, the location of the protrusion can be selected. The connective links positively engage the rods and the formation of an upset or button at the end of the rod results in a resistance weld between the rod and the link aperture. The resistance weld and the protrusions constrain the link to the rod and eliminates the additional fixation steps used in conventional belt manufacture and simplifies production. In this manner, the conventional manual welds and their attendant problems such as fatigue cracks are eliminated altogether.

Another aspect of the present invention is a heavy duty conveyor belt comprising rods of increased diameter for increased column strength to resist buckling. The increased rod diameter enables use of longer rods so the belt can carry heavier product per foot of belt as compared to conventional belts. Longer rods also make possible a conveyor belt wider than 38 inches which is the current length limit before column strength of the rods becomes a problem. The ends of the rods are tapered to a smaller diameter to enable the use of conventionally sized connective links. The transition area between the large diameter and the smaller diameter is a chamfered section which eliminates the high stress concentrations present in a straight-cut, annular transition section. In addition, the chamfered section mechanically traps the connective link on the outside of the belt eliminating the potential for lateral or transverse movement of the connective link along the rod.

Still another aspect of the present invention is the configuration of the connective links to resist lateral deflection and rotational movement about the rods during conveyor operation. Avoiding these movements decreases or eliminates fatigue stresses on the links and significantly decreases the chances for failure of the links.

Yet another aspect of the present invention is that the button head and inside weld seals the rod-link interface eliminating any crevices between the rod and the link aperture which provides a more sanitary edge without the necessity for repeated cleaning of the belt.

An additional aspect of the present invention is the provision of a structural feature on the connective link apertures to prohibit rotational movement of the link relative to the rod and thus eliminate the tenting problem.

These and other features and advantages of the invention may be more completely understood from the following detailed description of the preferred embodiments of the invention with reference to the accompanying drawings.

### BRIEF DESCRIPTION OF THE DRAWINGS

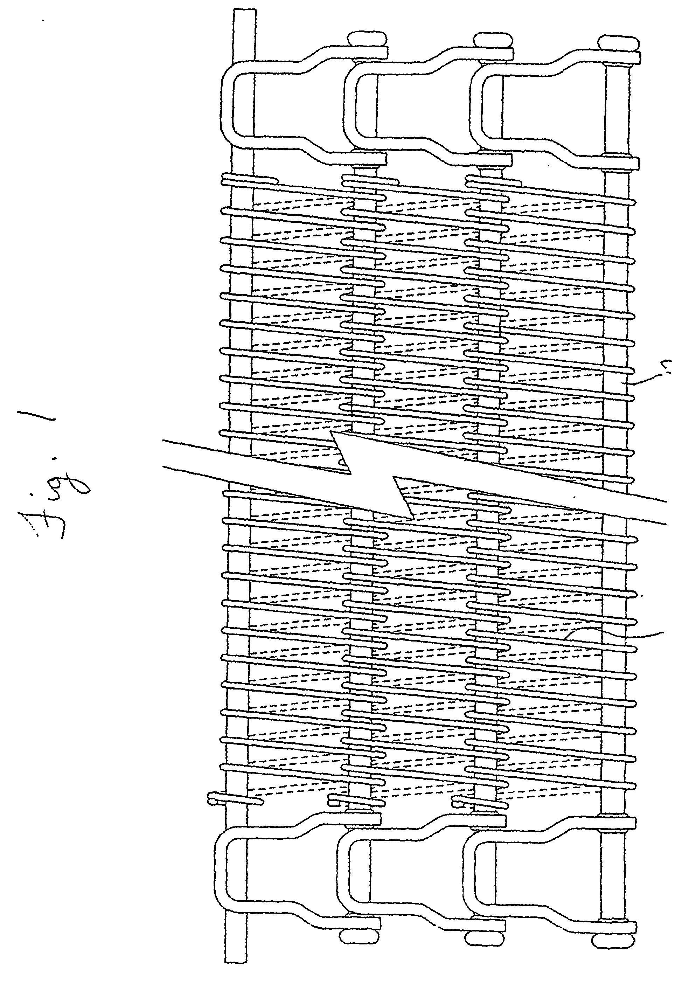

FIG. 1 is a top plan view of a section of the belt in accordance with the preferred embodiment of the invention shown with a metal overlay.

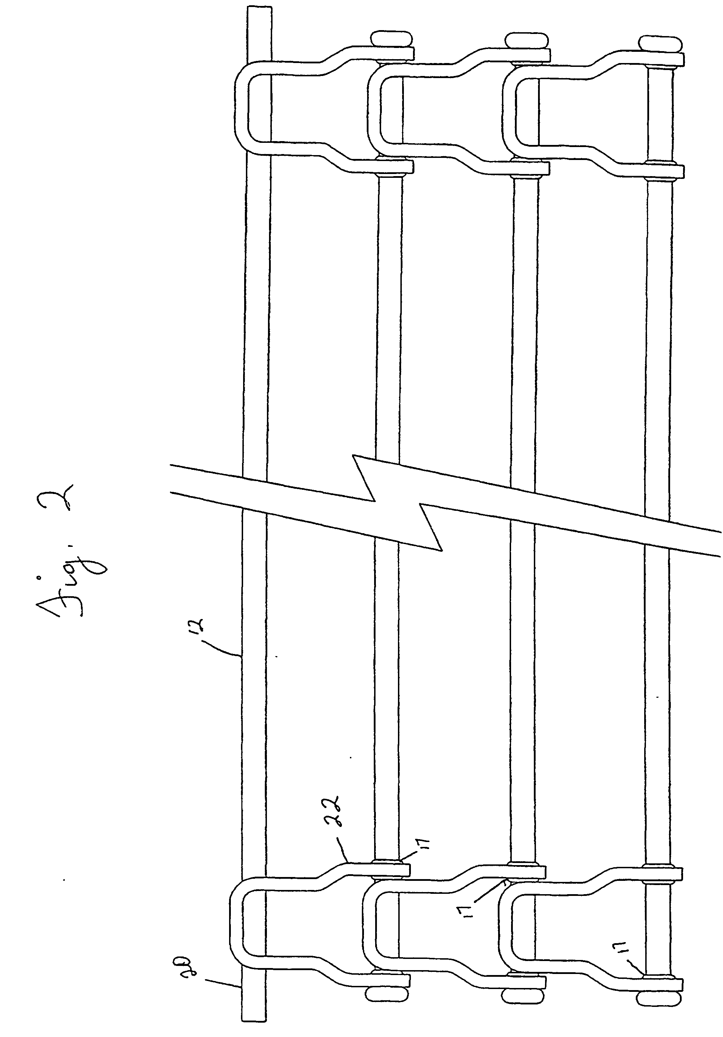

FIG. 2 is a top plan view of a section of the belt of FIG. 1, shown without an overlay.

FIG. 3 is a top plan view of a rod of a belt section as shown in FIGS. 1 and 2.

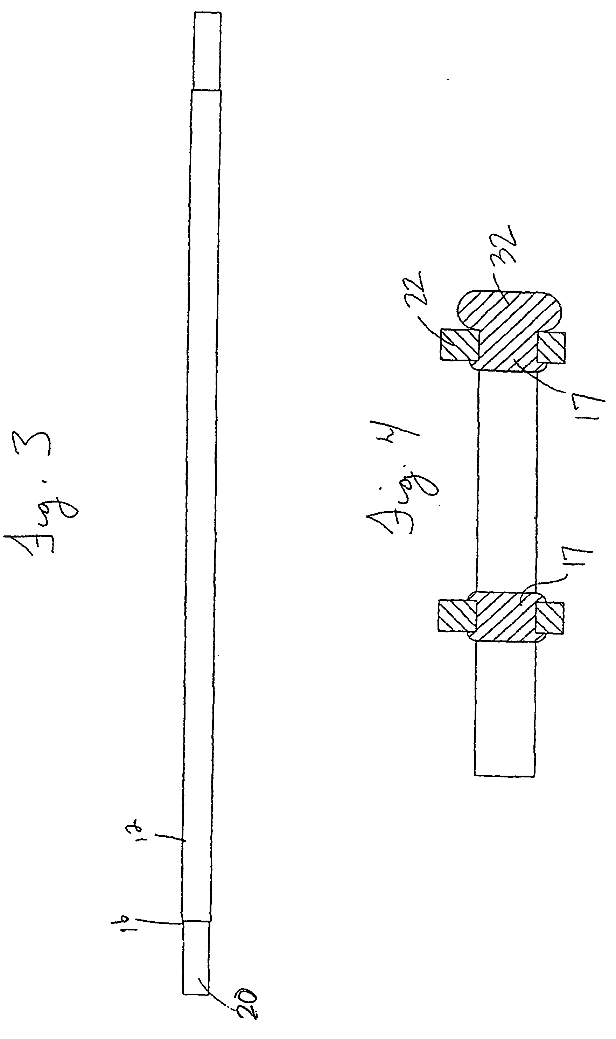

FIG. 4 is a sectional schematic drawing showing a connective link attached to a rod by formation of the button head and inside protrusions.

FIG. 5 is a detailed top plan view of a connective link and rod assembled together.

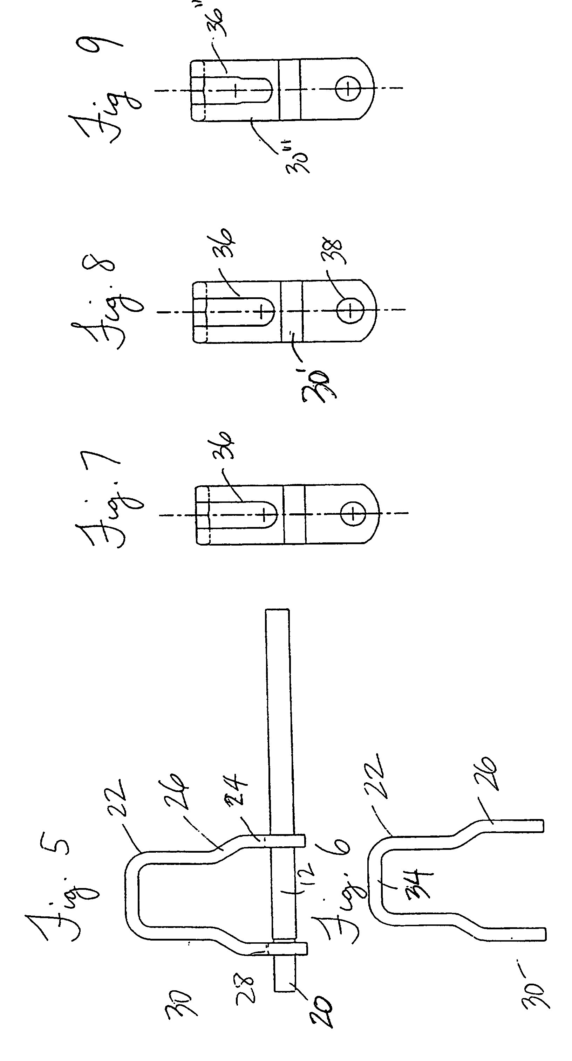

FIG. 6 is a detailed top plan view of a connective link.

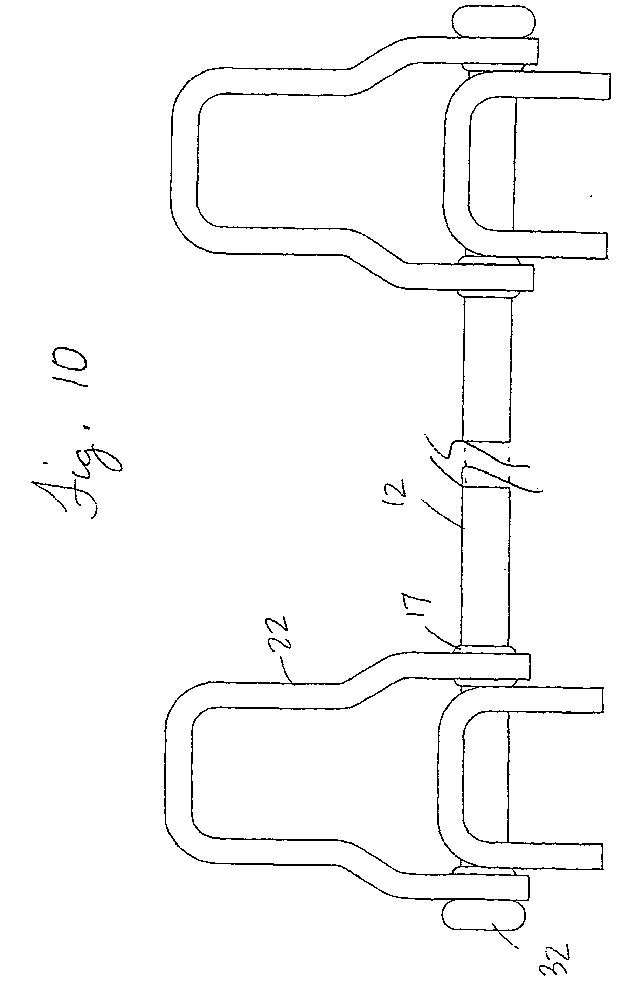

FIG. 7 is a side elevational view of one side of the link shown in FIG. 6.

FIG. 8 is a side elevational view of an alternative configuration of the link shown in FIG. 6.

FIG. 9 is a side elevational view of another alternative configuration of the link shown in FIG. 6.

FIG. 10 is a detailed top plan view of a single rod of a belt section as shown in FIG. 2 shown assembled and attached to its connective links.

FIG. 11 is a schematic representation of the rod and connective link shown with the electrode placement for forming the protrusions at the inner link legs.

FIG. 12 is a schematic representation of the rod and connective link shown with the electrode placement for forming the protrusions at the outer link legs and button head.

FIG. 13 is a side elevational view showing an alternative elongated aperture shown with a section of the rod.

FIG. 14 is a top plan view of a section of the belt in accordance with a second embodiment shown with a metal overlay.

FIG. 15 is a top plan view of a section of the belt of FIG. 14, shown without an overlay.

FIG. 16 is a top plan view of a rod of a belt section as shown in FIGS. 14 and 15.

FIG. 17 is a schematic drawing showing a connective link attached to a rod by formation of the buttonhead at the end of the rod.

FIG. 18 is a detailed top plan view of the connective link, rod and buttonhead of FIG. 17.

FIG. 19 is a detailed top plan view of a connective link of the present invention, specifically for use on the right side of a belt section as shown in FIGS. 14 and 15.

FIG. 20 is a side elevational view of the left side of the link shown in FIG. 19.

FIG. 21 is a side elevational view of the right side of the link shown in FIG. 19.

FIG. 22 a side elevational view of an alternative configuration of the right side of the link shown in FIG. 19.

FIG. 23 is a schematic representation of the assembly of a rod to a connective link.

FIG. 24 is a schematic representation of the application of electrodes to the connective link and rod combination of FIG. 23 for attachment of the connective link to the rod and formation of a buttonhead.

FIG. 25 is a detailed top plan view of a single rod of a belt section as shown in FIGS. 14 and 15 shown assembled and attached to its connective links.

FIG. 26 is a schematic representation of the conventional application of electrodes for attaching a connective link to a rod.

FIG. 27 is a schematic representation of the conventional welding process for attaching a connective link to a rod.

FIG. 28 is a top plan view of the links and rod of FIG. 27 shown welded together in the conventional manner.

FIG. 29 is a side elevational view of a series of connective links, two of which have tented by moved rotationally relative to the rods.

### DETAILED DESCRIPTION OF THE PREFERRED EMBODIMENTS

Referring to the figures, the preferred embodiments of conveyor belt 10 with improved rod to link attachment are made up of rods 12 and connective links 22. An overlay 14 extends between the ends of the rods to provide a conveying surface. A wire mesh overlay is shown in the figures, but any suitable metal or plastic overlay may be used. The belt may also be used without an overlay.

Broadly, the improved rod to link attachment of the present invention may be achieved by a mechanical interference between the rod and link aperture, and may be enhanced by resistance welding. This improved attachment could be utilized with rods of uniform diameter, or stepped rods which have reduced diameter portions at the ends.

In a first preferred embodiment, each rod 12 has a stepped area 16 between a large diameter central portion 18 and reduced diameter end portion 20. Stepped area 16 provides means to control expansion of the rod and the magnitude of such expansion when electrodes are applied to affix the rod and connective links.

Rods 12 are interconnected by connective links 22 generally having a U-shape with the legs being spaced apart so as to receive the cross-member of an adjacent link. Connective links 22 are provided with an aperture 24 in leg 26 and an aperture 28 in leg 30 for reception of a rod. In assembling belt 10, the links are placed so that legs 26 lay toward the inside of the belt, and legs 30 lay toward the outside of the belt. Therefore, legs 26 may herein be referred to as the inner legs, and legs 30 may be referred to as the outer legs of the connective links. Elongated apertures 36 are provided adjacent cross-member 34 on each leg 26 and 30. Elongated apertures 36 receive rods to allowing them to move therein enabling for collapse of the connective links relative to each other in an assembled belt. Collapse of the links into a nested arrangement occurs when the belt traverses a lateral curve.

Stepped transition area 16 of rod 12 is preferably positioned just to the inside of outer leg 30 so that aperture 28 receives the reduced diameter portion 20 of the rod. The stepped area provides a means of controlling where rod 12 swells and a mount when electrodes are applied to the rod and link. Protrusion 17 ensures that the rod and connective link are affixed at aperture 28 as depicted in FIG. 10.

In a second preferred embodiment a protrusion is formed on rods of uniform diameter by variable control of electrode placement on the rods. Depending upon such parameters as rod diameter and link size, electrodes can be placed so that a protrusion will form on the rod where it is desired.

Protrusion formation on either type of rod occurs because the link acts as a heat sink during manufacture. Upon application of the electrodes, the rod expands until it contacts the walls of the aperture. At that point in the expansion of the rod, the link absorbs heat thereby slowing the deformation of the rod to fuse the rod and link aperture together and form the protrusion or bulge. The protrusion is therefore a controlled deformation of the rod at a desired location.

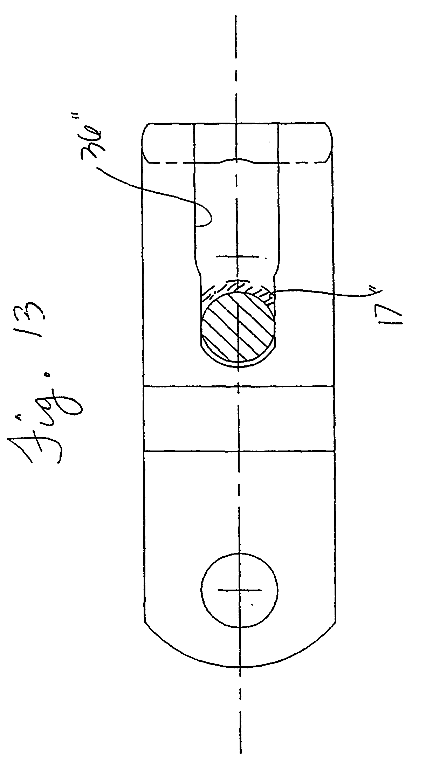

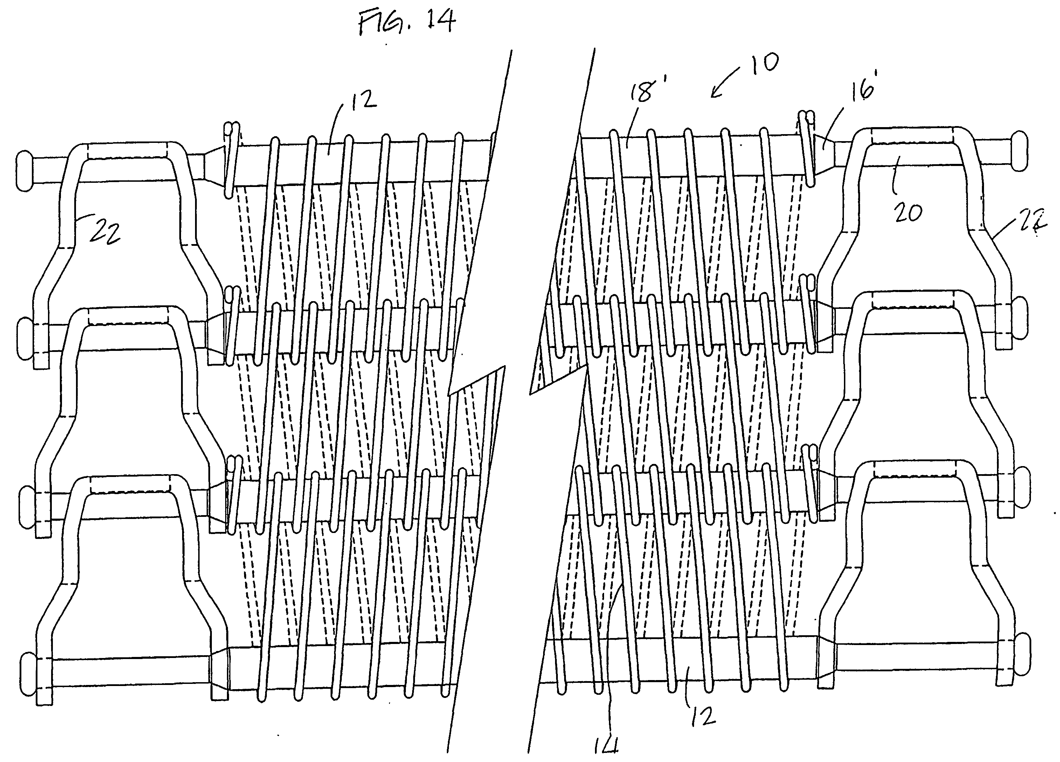

The attachment of the rod and link are illustrated in FIGS. 11 and 12 where an electrode is placed at the end of rod and another placed adjacent inner leg 26. When the appropriate energy is applied, the rod and link are fused together in aperture 24 and deformation of the rod results in protrusion 17 to constrain inner link leg 26 from lateral movement on the rod. Electrodes 40 are then placed on the inside of outer leg 30 and to the end of the rod outside of leg 30. Upon application of the appropriate energy, an upset or button head is formed at the end of the rod and the rod is simultaneously fused within aperture 28. Fusion of the rod in the apertures combined with positive placement of the link on the rod made possible by protrusion 17 eliminates the need for any additional steps of attaching the link and rod to one another by manual welding.

As an example, two links 22 are assembled to a single rod in the nested manner shown, with this configuration repeated along the belt. The rod is received in the elongated aperture near the cross-member of one link as well as the aligned apertures on the legs of a neighboring link. In this manner, the rod can move relative to the first link (shown as the lower link) and is generally fixed in place with respect to the second link (shown as the upper link).

Constraining the link from movement relative to the rod in the lateral and rotational directions prevents the movements which result in fatigue stresses and failure in the prior art, and prevents the link from traversing inward on the rod, thus eliminating any additional manufacturing steps.

FIG. 8 illustrates an alternative embodiment of link 22 with a modified outer leg. This leg has been labeled with a prime symbol as 30' to avoid any confusion. Leg 30' has an oval aperture 38 instead of a round one which is one way of enhancing the fusion of the link to the rod. As described above, the metal rod tends to fill the aperture when the protrusion or button head is formed. By changing the shape of the aperture, the relationship of the rod and link is also changed. When the metal rod is inserted into an oval aperture and the electrodes applied, the metal rod fills the oval aperture and attaches the rod and link together so as to constrain rotational movement of the rod in the aperture. While an oval aperture is shown in the drawings, any non-circular shape to the aperture is contemplated to be within the scope of the invention. In this manner, by using a link with an out-of-round aperture on the outer leg, rotational movement of the link relative to the rod is structurally constrained without adding any manufacturing or attachment steps.

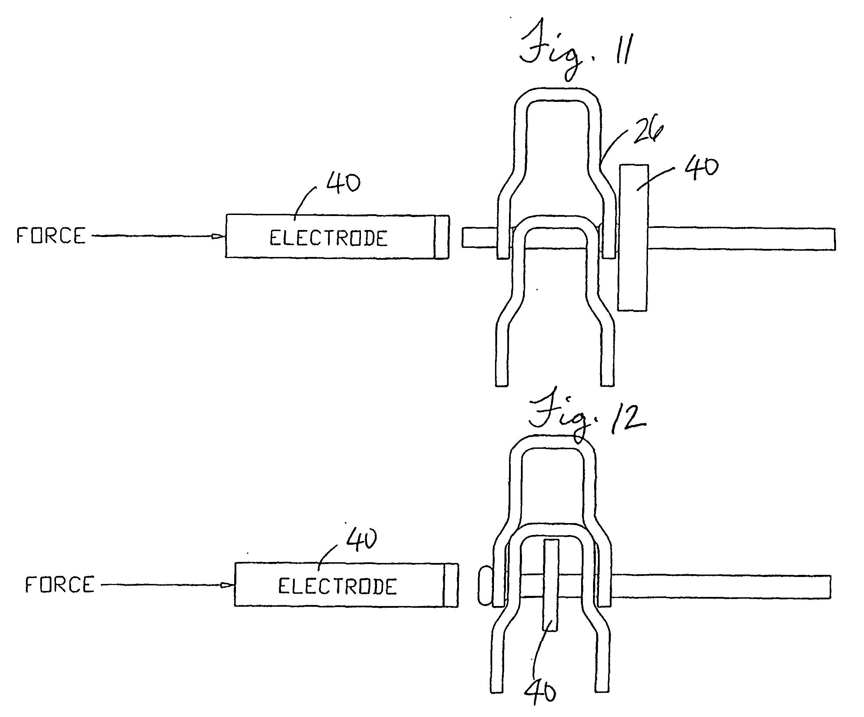

FIG. 9 shows another alternative link profile, link labeled 30'', with an elongated aperture 36'' which has a stepped configuration. Attachment of link 30" to a rod is shown in detail in FIG. 13 in which protrusion 17'' is shown in the narrow part of aperture 36''. This link profile prevents rotation of the link relative to the rod when the link-rod are in a collapsed state, but, will allow the rod to rotate within the slot when the rod is extended into the wider part of aperture 36''. This is an additional structural feature that prevents rotational movement of the rod relative to the link while traversing curves or otherwise collapsed.

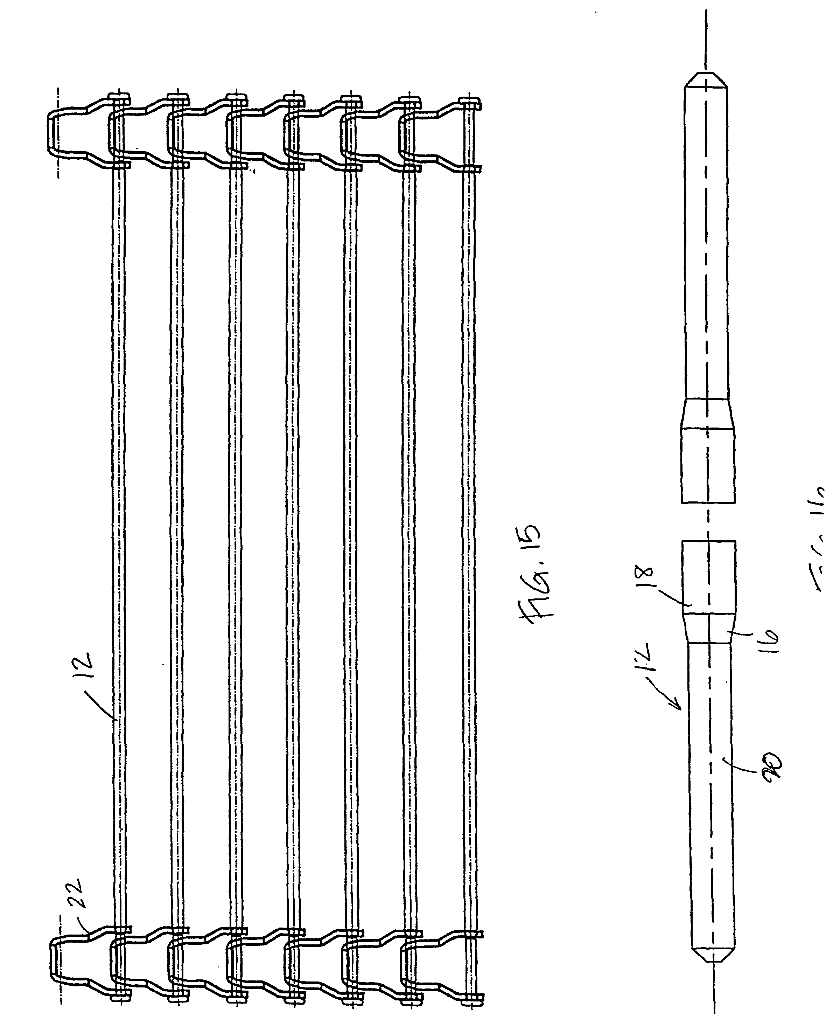

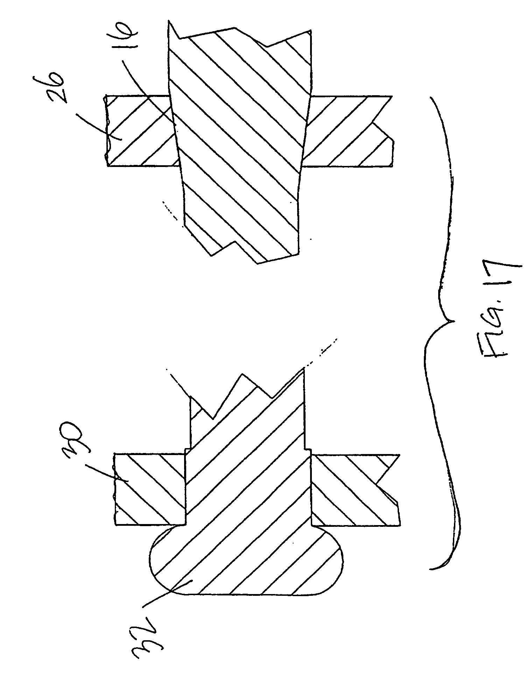

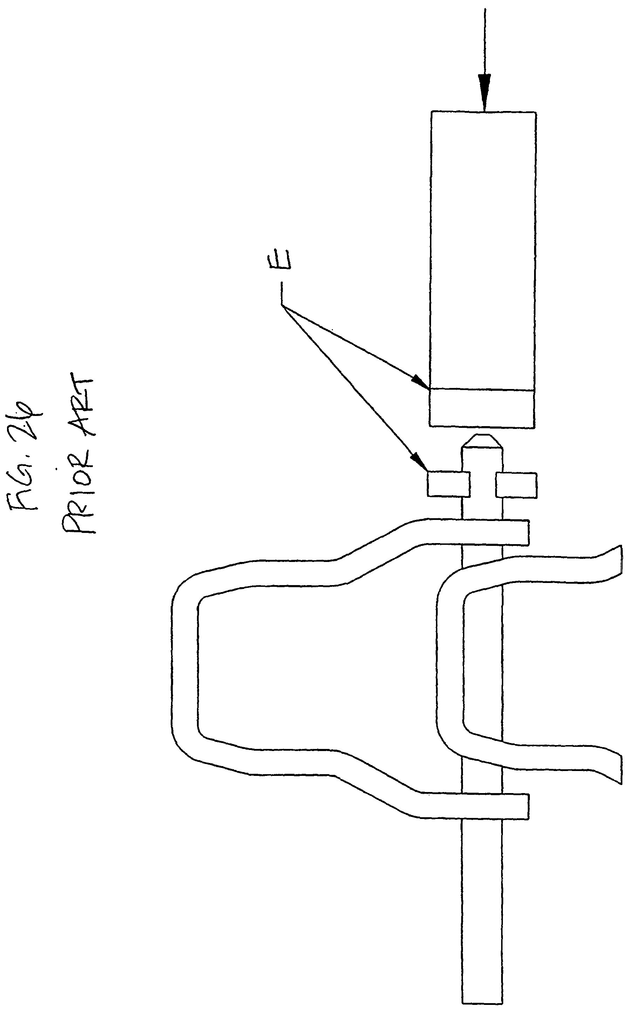

Referring to FIGS. 14-25, wherein like elements are indicated by like reference numerals, an embodiment is an extended width conveyor belt 10 comprised of rods 12 of improved design which eliminate the column strength problem. An overlay 14 extends between the ends of the rods to provide a conveying surface. A wire mesh overlay is shown in the figures, but any suitable metal or plastic overlay may be used. The belt may also be used without an overlay.

Each rod 12 has a chamfered transition area 16' between a large diameter central portion 18 and reduced diameter portions 20 at the ends. The larger diameter of central portion 18 provides increased column strength and enables a longer rod to be used, thereby providing a wider conveyor belt. Reduced diameter end portions 20 allow conventionally sized connective links to be used for the belt.

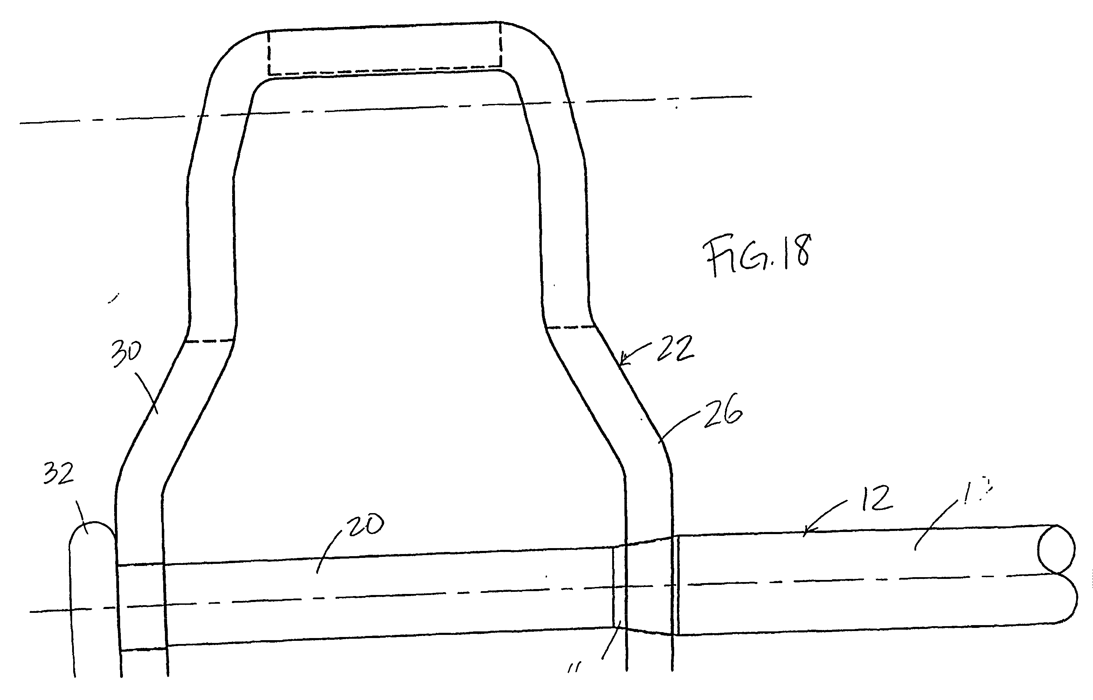

As seen in FIGS. 17 and 18, chamfered transition area 16' of rod 12 is captured in tapered aperture 24' and reduced diameter portion 20 is received in round aperture 26. The chamfered transition area provides a construction that is stronger than a simple straight-cut transition and eliminates the high concentration of stresses of a straight-cut or stepped transition. The rod is preferably made by using stock that has a diameter equal to the central area and cutting the chamfered transition area and reduced diameter area. The chamfered area and reduced diameter area could also be formed by rolling or any other means of manufacture to reduce the diameter.

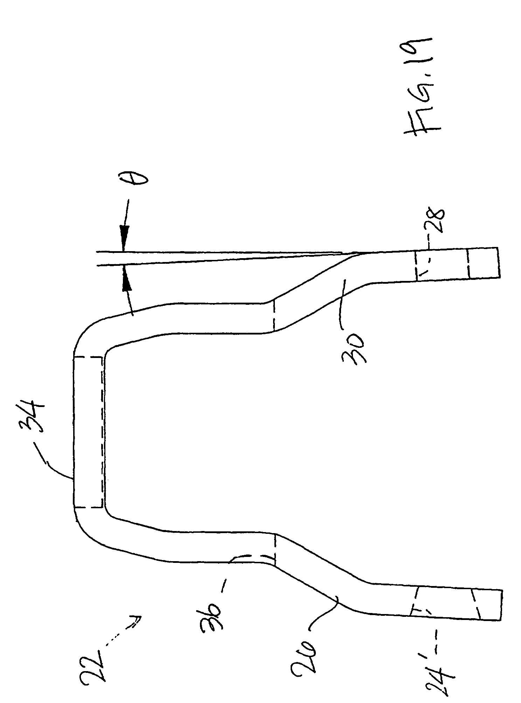

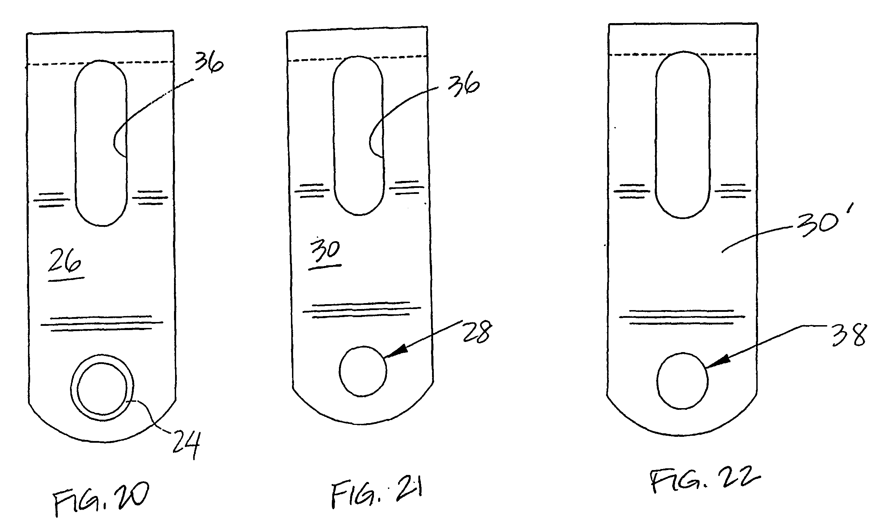

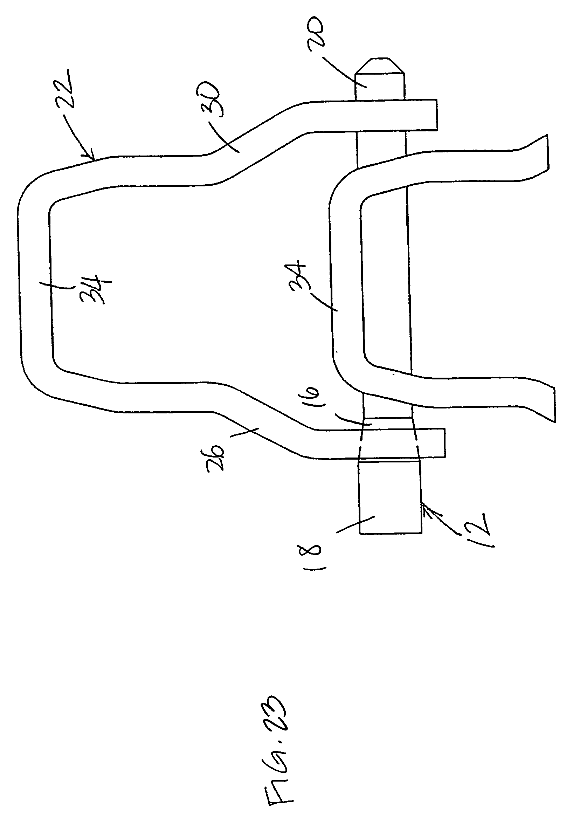

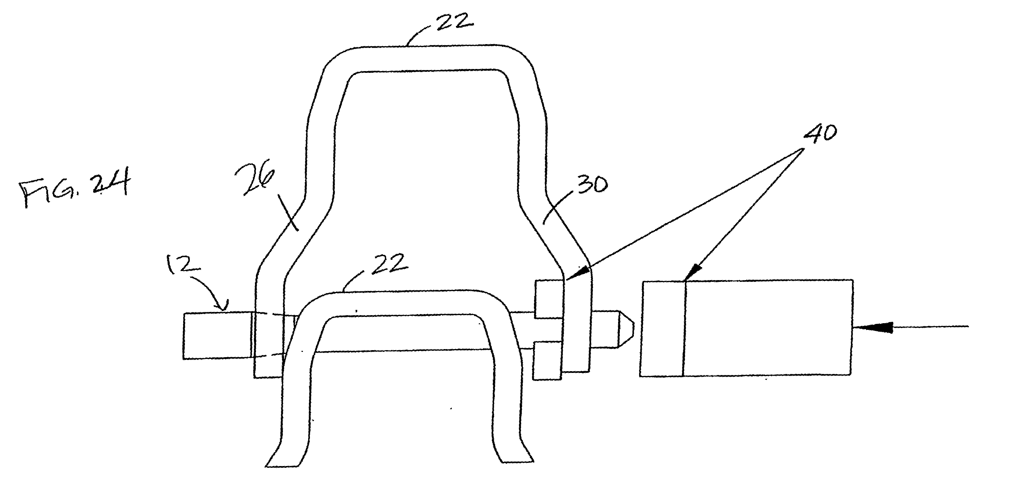

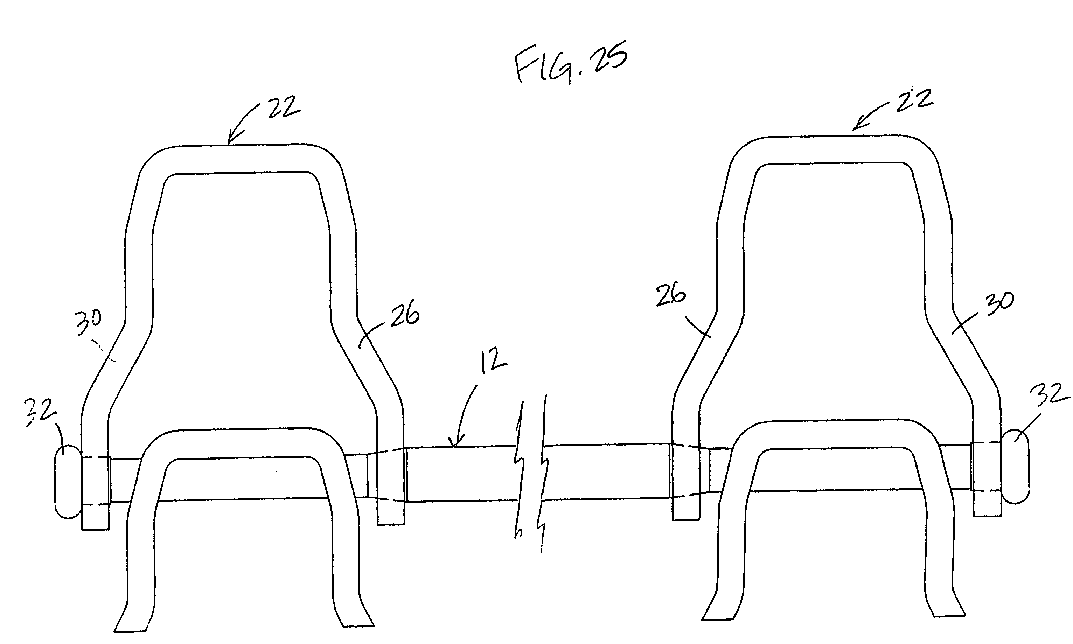

Similar to the first embodiment, FIGS. 19-21 illustrate link 22 in some detail with legs 26, 30 and cross-member 34. Elongated apertures 36 are provided between cross-member 34 on each leg 26 and 30 and the midsection of the link. Elongated apertures 36 receive rods and allow for the rods to move therein which allows for collapsing of the connective links relative to each other in an assembled belt which occurs when the belt traverses a lateral curve. As can be seen in FIGS. 20 and 21, apertures 24' and 28 are provided in legs 26 and 30 respectively for reception of rods. FIG. 23 illustrates a link 22 assembled to a rod. Once the link and rod are assembled together, a buttonhead 32 is formed at the end of the rod by applying electrodes 40 on the inside of leg 30 and to the end of the rod outside of leg 30 as seen in FIG. 24. An upset or buttonhead is formed at the end of the rod while the rod is simultaneously fused within aperture 28. Application of the electrodes causes the metal rod to swell and fill up the aperture thereby fusing the link and rod together. This fusion combined with positive placement of the link on the rod made possible by the tapered section eliminates the need for any additional steps of attaching the link and rod to one another.

Another feature of connective links 22 of the present invention is that the legs of the links have a slight outward flare, indicated as angle θ in FIG. 19, at rest. Angle θ is preferably less than 10°. When the links are assembled onto the rod and the buttonhead formed as seen in FIGS. 23-25, the legs of the link are compressed together with the inner leg being positively engaged to and constrained by tapered section 16 and the outer leg being constrained by buttonhead 32. The legs are compressed through angle θ on each side so that they are generally parallel. Thus when the link is assembled and constrained, lateral movement of the link relative to the rod is eliminated and the compression of the legs toward one another preloads the link for added strength when driving forces are applied to the belt.

Similar to the embodiment of FIG. 8, FIG. 22 illustrates an alternative embodiment of link 22 with a modified outer leg. Leg 30' has an oval aperture 38 instead of a round one to enhance the fusion of the link to the rod and structurally constrain rotational movement of the link relative to the rod.

The attachment of the rod and link in this embodiment is illustrated in FIG. 24 wherein the first (or lower) link is moved inward and an electrode 40 is placed just inside of leg 30. Another electrode is applied from the outside of leg 30, and when the appropriate energy is applied, the rod and link are fused together in round aperture 28. In this way, link 22 is press fitted onto chamfered area 16 of the rod, or put another way the chamfered area of the rod is captured in the aperture, and then the link is fused to the rod in the round aperture 28 without the need for welding. The slight outward flare of the legs of the connective link also provides the clearance required for resistance welding the rod to the link in the manner described.

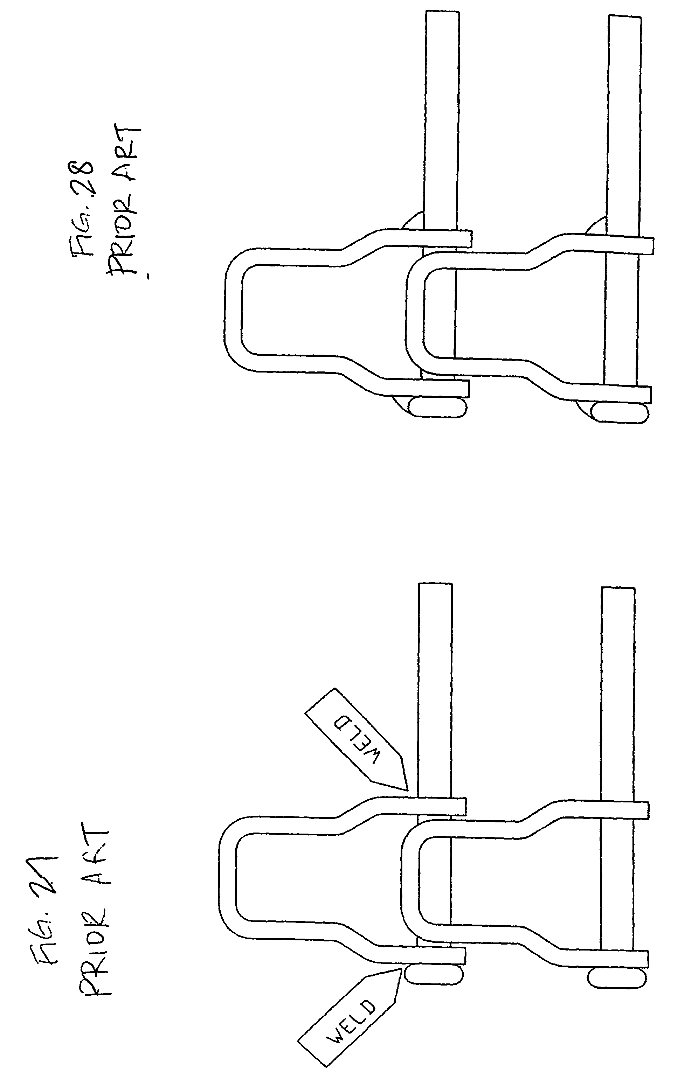

In the prior art, FIGS. 26-28, rods of uniform diameter without any lateral constraints were used so that the links could be moved laterally during manufacture. One conventional method of securing the rod to the link, FIG. 26, was to place electrodes E at the outer leg of the link and apply the appropriate energy. This would form the buttonhead to ensure that the links could not slide off of the end of the rod, but would not provide attachment of the rod and link. In order to attach the rod and link together, a secondary attachment step, FIGS. 27 -28, was to weld the legs of each individual link to the rod and buttonhead to affix the link thereto. This welding step is laborious and time-consuming.

Eliminating the prior art weld between the links and rods also eliminates the perceived failure of the belt by the users who are attuned to look for cracked or fractured welds as a sign of failure. Thus premature repair or replacement of the belt and the attendant warranty issues are avoided.

The parameters may be varied to achieve objectives other than those described in the preferred embodiments. The main parameters of the conveyor belt construction are (i) the link size, (ii) the diameter of the rod at the ends, (iii) the diameter of the rod at the central area, (iv) the shape and size of the transition portion, and (v) how the transition portion is formed.

Although the preferred embodiments of the invention have been shown with links placed at the ends of the rods, the improved rod to link attachment by resistance welding is contemplated to be used for links placed along the central area of the rod as well. With the appropriate placement of the electrodes, the expanded rod portions or protrusions could be formed anywhere along the length of the rod. Furthermore, while the preferred embodiments are illustrated and described as conveyor belts having U-shaped links, the improved rod to link attachment is contemplated to be used on conveyors with straight links to constrain a straight link on a rod and prevent lateral movement. The principle concepts of preventing lateral movement of the links, preventing rotational movement of the links and providing for selectively rotational movement of the links relative to the rod may be used in a variety of combinations. It is contemplated that a single conveyor belt may have certain sections or areas with one of these structures, while other sections on the same conveyor belt will have another one or combination of these structures.

Although the present invention has been illustrated in terms of preferred embodiments, it will be evident that numerous changes, adaptations, and modifications may be made without departing from the scope of the invention which is to be limited only by the appended claims.

## Claims

1. A conveyor belt (10) comprised of a repeated arrangement of interconnected rods (12) and connective links (22;30';30"), said connective links (22) each including a lateral cross-member (34) and a pair of legs (26,30;30';30") extending perpendicularly therefrom, said legs (26,30) having a first set laterally aligned apertures (24,28;38;24') for reception of a rod (12) and a second set of laterally aligned apertures (36;36") for reception of a rod, said links arranged such that the first apertures of a first link (22) are aligned with the second apertures (36;36") of a second link (22) for reception of a rod (12) there into,
wherein
each said rod (12) comprises a locking element (16) disposed at an end thereof
**characterized in that**
each said connective link (22;30';30'') comprises a corresponding rod fixation element (17) on one of said apertures for constraining movement of said link (22;30';30'') relative to said rod (12), wherein said rod fixation element comprises an integral protrusion formed between the ends of the corresponding rod.

2. The conveyor belt (10) of claim 1,
**characterized in that**
said locking element (16) comprises a tapered section (16') of said rod disposed between sections of varying diameters.

3. The conveyor belt (10) of claim 1 or 2,
**characterized in that**
said rod fixation element (17) comprises a non-circular aperture (38) for reception of said rod (12).

4. A conveyor belt (10) according to any of the preceding claims,
**characterized in that**
said rods (12) are fused to said apertures (24;28;38;24') of said links to define attachment points.

5. The conveyor belt (10) of claim 1, further comprising protrusions (17) on said rods (12) disposed proximate said attachment points for laterally constraining said links (22) there along.

6. The conveyor belt (10) of claim 5, wherein the locking element (16) is a button head (32) formed at an end of said rods further ensure that said links (22) remain engaged on said rods (12).

7. The conveyor belt (10) of claim 4, wherein said rods (12) comprise a stepped area (20) to provide portions of reduced diameter at said ends, wherein said stepped area is proximate one of said attachment points.

8. The conveyor belt (10) of claim 4, wherein at least one of said second apertures (36,36") of said links is non-circular to define a rotationally constraining geometry for a rod (12) inserted and fused therein.

9. The conveyor belt (10) of claim 8, wherein said non-circular apertures are ovals.

10. The conveyor belt (10) of claim 5, wherein said second apertures (36,36'') are elongated to allow rods (12) received therein to move in the longitudinal direction thereby providing collapsibility to adjacent links (22;30;30") of said conveyor belt (10).

11. The conveyor belt (10) of claim 10, wherein said elongated second apertures (36") are stepped to provide capture of said protrusions of said rods (12) when said links (30") are collapsed to thereby provide rotational constraint of said rods (12).

12. The conveyor belt (10) of any of the preceding claims, wherein said legs (26,30;30';30'') of said links (22) are configured to be pre-loaded when assembled with rods to form said belt.

13. The conveyor belt (10) of claim 12, wherein said legs (26,30,30';30'') of each said link (22) are flared outwardly from one another at rest with a spacing there between that is greater than the distance between said tapered section of said rod (12) and a button head formed at said rod end such that said legs (26,30) of said link are pressed together during assembly and constrained from lateral movement along said rod (12).

## Patentansprüche

1. Förderband (10) mit einer wiederholten Anordnung miteinander verbundener Stangen (12) und Bindeglieder (22; 30'; 30 "), wobei jedes dieser Bindeglieder (22) aus einer seitlichen Querstrebe (34) und einem Paar Schenkel (26, 30; 30'; 30") besteht, die sich senkrecht zu der Querstrebe erstrecken, wobei die Schenkel (26, 30) einen ersten Satz lateral ausgerichteter Öffnungen (24, 28; 38; 24') zur Aufnahme einer Stange (12) aufweisen und einen zweiten Satz lateral ausgerichteter Öffnungen (36; 36") zur Aufnahme einer Stange, wobei die Bindeglieder so angeordnet sind, dass die ersten Öffnungen eines ersten Bindegliedes (22) sich mit den zweiten Öffnungen (36; 36") eines zweiten Bindegliedes (22) decken zur Aufnahme einer Stange (12),
wobei
jede Stange(12) ein an einem Ende angeordnetes Verschlusselement (16) hat,
**dadurch gekennzeichnet, dass**
jedes dieser Bindeglieder (22; 30'; 30") ein entsprechendes Stangenfixierungselement (17) an einer der Öffnungen aufweist zur eingegrenzten Bewegung des Bindegliedes (22; 30'; 30") relativ zu der Stange (12), wobei das Stangenfixierungselement einen integralen zwischen den Enden der entsprechenden Stange ausgebildeten Vorsprung aufweist.

2. Förderband (10) gemäß Anspruch 1,
**dadurch gekennzeichnet, dass**
das Verschlusselement (16) ein sich verjüngendes Teilstück (16') an der Stange aufweist, welches zwischen Teilstücken unterschiedlichen Durchmessers vorgesehen ist.

3. Förderband (10) gemäß Anspruch 1 oder 2,,
**dadurch gekennzeichnet, dass**
das Stangenfixierungselement (17) eine unrunde Öffnung (38) aufweist zur Aufnahme der Stange (12).

4. Förderband (10) gemäß einem der vorhergehenden Ansprüche,
**dadurch gekennzeichnet, dass**
die Stangen (12) in den Öffnungen (24; 28; 38; 24') der Bindeglieder gesichert sind zur Eingrenzung von Anschlagspunkten.

5. Förderband (10) gemäß Anspruch 1, das weiterhin Vorsprünge (17) an den Stangen (12) aufweist, die neben den Anschlagspunkten vorgesehen sind zur seitlichen Eingrenzung der Bindeglieder (22).

6. Förderband (10) gemäß Anspruch 5, wobei das Verschlusselement (16) als Halbrundkopf (32) ausgebildet ist, der an einem Ende der Stangen vorgesehen ist zur zusätzlichen Absicherung der an den Stangen (12) befestigten Bindeglieder (22).

7. Förderband (10) gemäß Anspruch 4, wobei die Stangen (12) einen abgestuften Bereich (20) aufweisen, der Abschnitte mir geringerem Durchmesser vorsieht, wobei der abgestufte Bereich neben einem der Anschlagspunkte liegt.

8. Förderband (10) gemäß Anspruch 4, wobei mindestens eine der zweiten Öffnungen (36, 36") der Bindeglieder unrund ist zur Festlegung einer rotierend begrenzenden Geometrie für eine Stange (12), die darin eingeführt und gesichert wird.

9. Förderband (10) gemäß Anspruch 8, wobei die unrunden Öffnungen oval ausgebildet sind.

10. Förderband (10) gemäß Anspruch 5, wobei die zweiten Öffnungen (36, 36") verlängert ausgebildet sind, damit die darin gehaltenen Stangen sich in Längsrichtung bewegen können, wodurch sie mit den angrenzenden Bindegliedern (22; 30; 30") des Förderbandes (10) zusammenklappbar sind.

11. Förderband (10) gemäß Anspruch 10, wobei die verlängerten zweiten Öffnungen (36") abgestuft ausgebildet sind, wodurch die Vorsprünge der Stangen (12) erfasst werden können, wenn die Bindeglieder (30") zusammengeklappt werden, um dabei eine rotierende Eingrenzung der Stangen (12) zu ermöglichen.

12. Förderband (10) gemäß einem der vorhergehenden Ansprüche, wobei die Schenkel (26, 30; 30'; 30") der Bindeglieder (22) so konfiguriert sind, dass sie vorgespannt sind, wenn sie mit den Stangen zu dem Band zusammenmontiert werden.

13. Förderband (10) gemäß Anspruch 12, wobei sich die Schenkel (26, 30, 30'; 30") eines jeden Bindegliedes (22) in Ruhestellung nach außen hin voneinander konisch entfernen mit einem Zwischenraum von mehr als dem Abstand zwischen dem sich verjüngen Teilstück der Stange (12) und einem am Ende der Stange ausgebildeten Halbrundkopf, so dass die Schenkel (26, 30) der Bindeglieder während der Montage zusammengedrückt und an einer Seitwärtsbewegung entlang der Stange gehindert werden.

## Revendications

1. Bande transporteuse (10) constituée d'un arrangement répété de tiges (12) et de maillons de connexion (22; 30'; 30") interconnectés, lesdits maillons de connexion (22) comprenant chacun un élément transversal latéral (34) et une paire de branches (26, 30; 30'; 30") s'étendant perpendiculairement à partir de celui-ci, lesdites branches (26, 30) comportant un premier ensemble d'ouvertures latéralement alignées (24, 28; 38; 24') destinées à recevoir une tige (12), et un deuxième ensemble d'ouvertures latéralement alignées (36; 36") destinées à recevoir une tige, lesdits maillons étant arrangés de telle sorte que les premières ouvertures d'un premier maillon (22) soient alignées avec les deuxièmes ouvertures (36, 36") d'un deuxième maillon (22) afin de recevoir une tige (12) en elles,
dans laquelle chaque tige (12) comprend un élément de verrouillage (16) disposé à une extrémité de celle-ci,
**caractérisée en ce que**:
chacun desdits maillons de connexion (22; 30'; 30") comprend un élément de fixation de tige (17) correspondant sur l'une desdites ouvertures afin d'empêcher tout déplacement dudit maillon (22; 30'; 30") par rapport à ladite tige (12), dans laquelle ledit élément de fixation de tige comprend une saillie intégrale formée entre les extrémités de la tige correspondante.

2. Bande transporteuse (10) selon la revendication 1, **caractérisée en ce que**:
ledit élément de verrouillage (16) comprend une section effilée (16) de ladite tige disposée entre des sections à diamètres variables.

3. Bande transporteuse (10) selon la revendication 1 ou 2, **caractérisée en ce que**:
ledit élément de fixation de tige (17) comporte une ouverture non circulaire (38) destinée à recevoir ladite tige (12).

4. Bande transporteuse (10) selon l'une quelconque des revendications précédentes,
**caractérisée en ce que**:
lesdites tiges (12) sont fusionnées dans lesdites ouvertures (24; 28; 38; 24') desdits maillons afin de définir des points de connexion.

5. Bande transporteuse (10) selon la revendication 1, comprenant en outre des saillies (17) sur lesdites tiges (12) disposées à proximité desdits points de connexion afin de retenir latéralement lesdits maillons (22) le long de celles-ci.

6. Bande transporteuse (10) selon la revendication 5, dans laquelle l'élément de verrouillage (16) est une tête bombée (32) formée à une extrémité desdites tiges et assure en outre que lesdits maillons (22) restent engagés sur lesdites tiges (12).

7. Bande transporteuse (10) selon la revendication 4, dans laquelle lesdites tiges (12) présentent une région étagée (20) pour fournir des parties à diamètre réduit auxdites extrémités, dans laquelle ladite région étagée est située à proximité de l'un desdits points de connexion.

8. Bande transporteuse (10) selon la revendication 4, dans laquelle au moins une desdites deuxièmes ouvertures (36, 36") desdits maillons est non circulaire de manière à définir une géométrie d'empêchement de rotation pour une tige (12) insérée et fusionnée dans celle-ci.

9. Bande transporteuse (10) selon la revendication 8, dans laquelle lesdites ouvertures non circulaires sont ovales.

10. Bande transporteuse (10) selon la revendication 5, dans laquelle lesdites deuxièmes ouvertures (36, 36") sont allongées afin de permettre aux tiges (12) reçues en elles de se déplacer dans la direction longitudinale, fournissant ainsi une capacité de resserrage à des maillons voisins (22; 30; 30") de ladite bande transporteuse (10).

11. Bande transporteuse (10) selon la revendication 10, dans laquelle lesdites deuxièmes ouvertures allongées (36") sont étagées de manière à assurer la capture desdites saillies desdites tiges (12) lorsque lesdits maillons (30") sont resserrés, fournissant ainsi un empêchement de rotation desdites tiges (12).

12. Bande transporteuse (10) selon l'une quelconque des revendications précédentes, dans laquelle lesdites branches (26, 30; 30'; 30") desdits maillons (22) sont configurées de manière à être pré-chargées lorsqu'elles sont assemblées avec des tiges pour former ladite bande.

13. Bande transporteuse (10) selon la revendication 12, dans laquelle lesdites branches (26, 30, 30'; 30") de chacun desdits maillons (22) sont évasées vers l'extérieur les unes par rapport aux autres au repos avec un espacement entre elles qui est plus grand que la distance entre ladite section effilée de ladite tige (12) et une tête bombée formée à ladite extrémité de tige, de telle sorte que lesdites branches (26, 30) dudit maillon soient pressées ensemble durant l'assemblage et soient empêchées d'effectuer tout déplacement latéral le long de ladite tige (12).
